# EUROPEAN PATENT SPECIFICATION

(11) **EP 1 494 105 B1**
(45) Date of publication and mention of the grant of the patent: **11.10.2006**
(21) Application number: 04015678.8
(22) Date of filing: 02.07.2004
(51) Int. Cl.: G06F 1/04

(54) **Signal processing circuit module in which selection of clock signal is switched by simple means**
Signalverarbeitungsmodul mit einfacher Auswahl des Taktsignals
Module de traitement de signaux avec sélection simple d'horloge

(30) Priority: 04.07.2003 JP 2003192057
(43) Date of publication of application: 05.01.2005
(73) Proprietor: ALPS ELECTRIC CO., LTD., Tokyo 145-8501 (JP)
(72) Inventor: Yamamoto, Yukimasa, Ota-Ku, Tokyo, 145-8501 (JP)
(74) Representative: Klunker . Schmitt-Nilson . Hirsch

(56) References cited:
- US-A- 4 982 116
- PATENT ABSTRACTS OF JAPAN vol. 0155, no. 15 (P-1293), 27 December 1991 (1991-12-27) & JP 3 223913 A (FUJITSU LTD), 2 October 1991 (1991-10-02)
- PATENT ABSTRACTS OF JAPAN vol. 0172, no. 90 (P-1549), 3 June 1993 (1993-06-03) & JP 5 019023 A (HITACHI LTD; others: 01), 26 January 1993 (1993-01-26)

## Description

### BACKGROUND OF THE INVENTION

### 1. Field of the Invention

The present invention relates to a signal processing circuit module. More particularly, the present invention relates to a signal processing circuit module in which, when an internal clock signal or an external clock signal is selectively supplied to a control section that operates in accordance with a clock signal, the selection of a clock signal to be supplied is switched by simple means.

### 2. Description of the Related Art

In general, signal processing circuit modules incorporate a CPU for controlling each section, and thus a clock signal is required to operate the CPU. For the clock signal to operate the CPU, usually, an internal clock signal which is generated by an internal clock signal generation circuit is used. When the signal processing circuit module is used for a special purpose, for example, when the signal processing circuit module is a Bluetooth module, an external clock signal, which is supplied externally, is used instead of the internal clock signal.

In this type of signal processing circuit module, in order to switch the selection between the internal clock signal and the external clock signal, a clock signal switch section is provided inside the signal processing circuit module. For such a clock signal switch section, usually, a plurality of chip resistors are used, so that the clock signal to be supplied to the CPU is switched by selecting the connection or non-connection of these chip resistors.

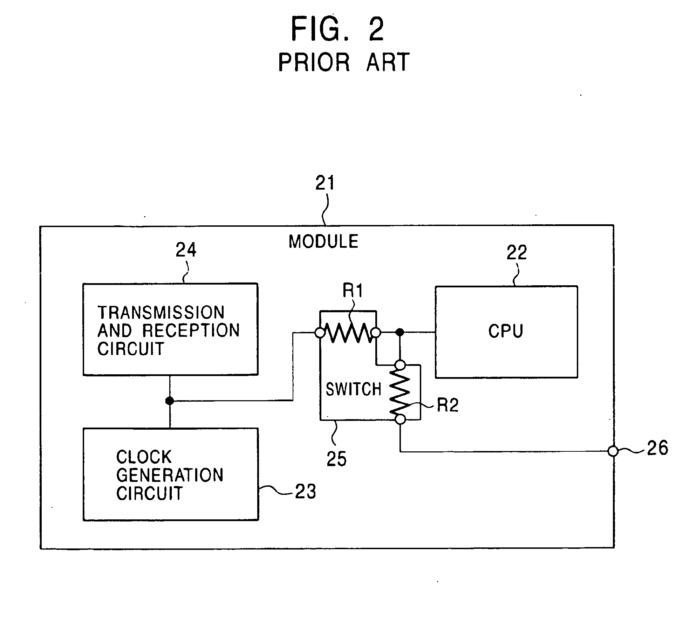

Here, Fig. 2 shows an example of the configuration of this type of such a known signal processing circuit module, and is a block diagram showing the configuration of the main part thereof.

As shown in Fig. 2, this signal processing circuit module includes a module substrate 21, a CPU (control section) 22, a clock generation circuit 23, a Bluetooth transmission and reception circuit (signal processing circuit) 24, a clock signal switch section 25 formed of two chip resistors R1 and R2, and an external clock signal input terminal 26. In this case, the CPU 22, the clock generation circuit 23, the Bluetooth transmission and reception circuit 24, and the clock signal switch section 25 are all formed on the module substrate 21, and the external clock signal input terminal 26 extends to the edge portion of the module substrate 21.

Then, the CPU 22 is connected to the clock generation circuit 23 through the chip resistor R1 of the clock signal switch section 25, and at the same time, is connected to the external clock signal input terminal 26 through the chip resistor R2 of the clock signal switch section 25. The clock generation circuit 23 is connected to the Bluetooth transmission and reception circuit 24.

In the signal processing circuit module having the above-described configuration, the clock generation circuit 23 generates an internal clock signal and supplies this internal clock signal to the transmission and reception circuit 24 and the clock signal switch section 25.

When an internal clock signal is supplied to the CPU 22 so that the CPU 22 performs a control operation in accordance with the internal clock signal, the clock signal switch section 25 is set in such a manner that the chip resistor R1 is connected and the chip resistor R2 is not connected. In such a setting, the internal clock signal generated by the clock generation circuit 23 is supplied to the CPU 22 through the chip resistor R1 of the clock signal switch section 25, and the CPU 22 performs a control operation in accordance with the internal clock signal. In this case, when the external clock signal is not supplied to the external clock signal input terminal 26, in the clock signal switch section 25, the chip resistor R2 may be kept in a connected state without being set to a non-connected state.

On the other hand, when an external clock signal is supplied to the CPU 22 so that the CPU 22 performs a control operation in accordance with the external clock signal, the clock signal switch section 25 is set in such a manner that the chip resistor R1 is not connected and the chip resistor R2 is connected. If the clock signal switch section 25 is set in this manner, the internal clock signal generated by the clock generation circuit 23 is blocked by the non-connected chip resistor R1 of the clock signal switch section 25, the external clock signal applied externally to the external clock signal input terminal 26 is supplied to the CPU 22 through the chip resistor R2 of the clock signal switch section 25, and the CPU 22 performs a control operation in accordance with the external clock signal.

In this type of such a known signal processing circuit module, in order to switch the clock signal supplied to the CPU 22, not only must the clock signal switch section 25 be incorporated in advance inside the signal processing circuit module, but also the connection and the non-connection of the chip resistors R1 and R2 of the clock signal switch section 25 must be switched when the clock signal is switched. When the connection and the non-connection of the chip resistors R1 and R2 of the clock signal switch section 25 are switched, complex operation steps of removing the cover of the signal processing circuit module and switching the connection and the non-connection of the chip resistors R1 and R2 must be performed.

On the other hand, in order to avoid the switching of the connection and the non-connection of the chip resistors R1 and R2 at the clock signal switch section 25, it is considered that two types of signal processing circuit modules of a signal processing circuit module in which only the chip resistor R1 of the clock signal switch section 25 is connected for the internal clock signal (the chip resistor R2 is not connected) and a signal processing circuit module in which only the chip resistor R2 of the clock signal switch section 25 is connected for the external clock signal (the chip resistor R1 is not connected) are provided, and means for selecting and using the signal processing circuit module in accordance with the type of the clock signal supplied to the CPU 22 is provided. However, in this type of means, two types of signal processing circuit modules must be provided in advance, and the manufacturing cost increases correspondingly.

### SUMMARY OF THE INVENTION

The present invention has been made in view of such technical background. An object of the present invention is to provide a signal processing circuit module in which switching is simply performed in accordance with the connection and the non-connection of an extension terminal without providing, inside the signal processing circuit module, a clock switch section for switching the type of clock signal which is selectively supplied to the control section.

To achieve the above-mentioned object, the present invention provides a signal processing circuit module including: a clock generation circuit for generating an internal clock signal; a control section that operates in accordance with a clock signal to be supplied; a signal processing circuit that operates in accordance with the internal clock signal; an internal clock signal output terminal connected to the clock generation circuit; and an external clock signal input terminal connected to the control section, the clock generation circuit, the control section, and the signal processing circuit being arranged on a module substrate, and the internal clock signal output terminal and the external clock signal input terminal being extended to the edge portion of the module substrate, wherein, when the control section is made to operate in accordance with the internal clock signal, the internal clock signal output terminal and the external clock signal input terminal are conductively connected to each other, the internal clock signal is supplied to the control section through the internal clock signal output terminal and the external clock signal input terminal, which are connected to each other, and when the control section is made to operate in accordance with an external clock signal, the external clock signal input to the external clock signal input terminal is directly supplied to the control section.

According to such means, when the control section is made to operate in accordance with the internal clock signal, the internal clock signal output terminal and the external clock signal input terminal are conductively connected to each other, and the internal clock signal is supplied to the control section through the internal clock signal output terminal and the external clock signal input terminal, which are connected to each other. When the control section is made to operate in accordance with an external clock signal, the external clock signal input to the external clock signal input terminal is directly supplied to the control section. The switching of the type of the clock signal supplied to the control section is performed by selecting the connection and the non-connection of the internal clock signal output terminal and the external clock signal input terminal, which are extended externally from the module case. Therefore, complex operation steps of removing the cover of the signal processing circuit module and switching the connection and the non-connection of the chip resistors are eliminated. Moreover, two types of signal processing circuit modules need not to be provided, and an inexpensive signal processing circuit module is obtained.

In the above-described means, preferably, the internal clock signal output terminal and the external clock signal input terminal are formed to extend so as to be adjacent to the edge portion of the module substrate.

With such a construction, since the internal clock signal output terminal and the external clock signal input terminal are arranged adjacent to each other, the connection and the non-connection of them can be performed by simple connection selection means, such as a connection lead.

### BRIEF DESCRIPTION OF THE DRAWINGS

Fig. 1 shows an embodiment of a signal processing circuit module according to the present invention, and is a block diagram showing the configuration of the main part thereof; and
Fig. 2 shows an example of the configuration of a known signal processing circuit module, and is a block diagram showing the configuration of the main part thereof.

### DESCRIPTION OF THE PREFERRED EMBODIMENT

An embodiment of the present invention will now be described below with reference to the drawings.

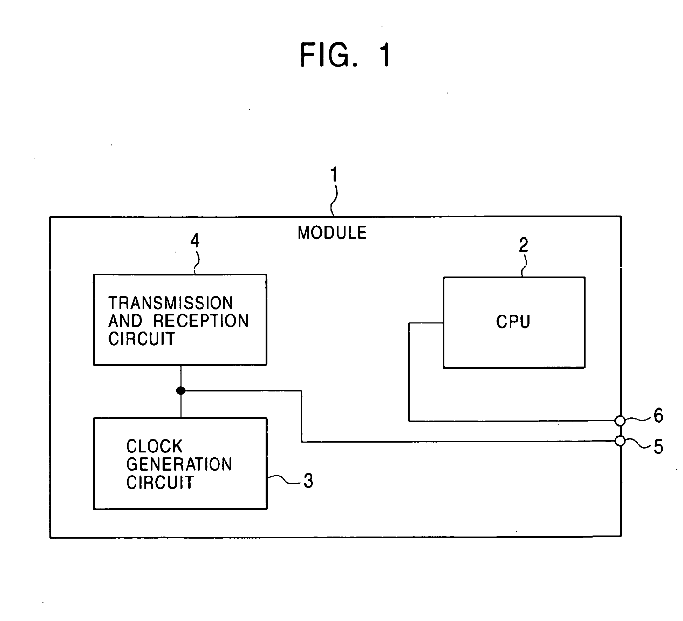

Fig. 1 shows an embodiment of a signal processing circuit module according to the present invention, and is a block diagram showing the configuration of the main part thereof.

As shown in Fig. 1, the signal processing circuit module according to this embodiment includes a module substrate 1, a CPU (control section) 2, a clock generation circuit 3, a Bluetooth transmission and reception circuit (signal processing circuit) 4, an internal clock signal output terminal 5, and an external clock signal input terminal 6. In this case, the CPU 2, the clock generation circuit 3, and the Bluetooth transmission and reception circuit 4 are all formed so as to be arranged on the module substrate 1, and the internal clock signal output terminal 5 and the external clock signal input terminal 6 extend to the edge portion of the module substrate 1.

Then, the CPU 2 is connected to the external clock signal input terminal 6. The clock generation circuit 3 is connected to the Bluetooth transmission and reception circuit 4 and the internal clock signal output terminal 5.

In the signal processing circuit module having the above-described configuration, the clock generation circuit 3 generates an internal clock signal and supplies this internal clock signal to the Bluetooth transmission and reception circuit 4 and the internal clock signal output terminal 5.

Here, when the internal clock signal is supplied to the CPU 2 so that the CPU 2 performs a control operation in accordance with the internal clock signal, the section between the internal clock signal output terminal 5 and the external clock signal input terminal 6 is conductively connected by ordinary connection means, for example, a connection lead. In such a connected state, the internal clock signal generated by the clock generation circuit 3 is supplied to the CPU 2 from the internal clock signal output terminal 5 through the external clock signal input terminal 6 which is conductively connected thereto, and the CPU 2 performs a control operation in accordance with the internal clock signal. In this case, the external clock signal input terminal 6 is set in a state in which an external clock signal is not supplied.

On the other hand, when the external clock signal is supplied to the CPU 2 so that the CPU 2 performs a control operation in accordance with the external clock signal, the internal clock signal output terminal 5 is not connected to the external clock signal input terminal 6, and the external clock signal is supplied to the external clock signal input terminal 6. In such a connected state, the external clock signal, which is externally applied to the external clock signal input terminal 6, is directly supplied to the CPU 2, and the CPU 2 performs a control operation in accordance with the external clock signal.

In the manner described above, according to the signal processing circuit module in accordance with this embodiment, the switching of the type of the clock signal supplied to the CPU 2 is performed by selecting the connection or the non-connection of the internal clock signal output terminal 5 and the external clock signal input terminal 6. Therefore, complex operation steps of removing the cover of the signal processing circuit module and changing the connection/non-connection state of the chip resistors are eliminated. Moreover, two types of signal processing circuit modules need not to be provided, and an inexpensive signal processing circuit module can be obtained.

The embodiment has been discussed above by using as an example a case in which the signal processing circuit is the Bluetooth transmission and reception circuit 4. However, the signal processing circuit according to the present invention is not restricted to the Bluetooth transmission and reception circuit and, of course, the signal processing circuit may be another type of signal processing circuit or the like.

## Claims

1. A signal processing circuit module comprising:
a clock generation circuit for generating an internal clock signal;
a control section that operates in accordance with a clock signal to be supplied;
a signal processing circuit that operates in accordance with said internal clock signal;
an internal clock signal output terminal connected to said clock generation circuit; and
an external clock signal input terminal connected to said control section,
said clock generation circuit, said control section, and said signal processing circuit being arranged on a module substrate, and said internal clock signal output terminal and said external clock signal input terminal being extended to the edge portion of said module substrate,
wherein, when said control section is made to operate in accordance with said internal clock signal, said internal clock signal output terminal and said external clock signal input terminal are conductively connected to each other, said internal clock signal is supplied to said control section through the internal clock signal output terminal and the external clock signal input terminal, which are connected to each other, and when said control section is made to operate in accordance with said external clock signal, an external clock signal input to said external clock signal input terminal is directly supplied to said control section.

2. A signal processing circuit module according to Claim 1, wherein said internal clock signal output terminal and said external clock signal input terminal extend so as to be adjacent to the edge portion of said module substrate.

3. A signal processing circuit module according to Claim 1 or 2, wherein said control section is a CPU.

4. A signal processing circuit module according to Claim 1, 2 or 3, wherein said signal processing circuit is a signal transmission and reception circuit.

## Patentansprüche

1. Signalverarbeitungsschaltungsmodul, aufweisend:
eine Takterzeugungsschaltung zum Erzeugen eines internen Taktsignals;
einen Steuerabschnitt, der entsprechend einem zu liefernden Taktsignal arbeitet;
eine Signalverarbeitungsschaltung, die entsprechend dem internen Taktsignal arbeitet;
einen mit der Takterzeugungsschaltung verbundenen Anschluss zur Ausgabe eines internen Taktsignals; und
einen mit dem Steuerabschnitt verbundenen Anschluss für die Eingabe eines externen Taktsignals;
wobei die Takterzeugungsschaltung, der Steuerabschnitt und die Signalverarbeitungsschaltung auf einem Modulsubstrat angeordnet sind und der Anschluss für die Ausgabe des internen Taktsignals und der Anschluss für die Eingabe des externen Taktsignals bis zum Randbereich des Modulsubstrates verlängert sind,
wobei, wenn der Steuerabschnitt zum Arbeiten entsprechend dem internen Taktsignal gebracht wird, der Anschluss für die Ausgabe des internen Taktsignals und der Anschluss für die Eingabe des externen Taktsignals miteinander leitend verbunden sind, wobei das interne Taktsignal dem Steuerabschnitt über den Anschluss für die Ausgabe des internen Taktsignals und den Anschluss für die Eingabe des externen Taktsignals, die miteinander verbunden sind, zugeführt wird, und, wenn der Steuerabschnitt zum Arbeiten entsprechend dem externen Taktsignal gebracht wird, eine Eingabe eines externen Taktsignals an den Anschluss für die Eingabe des externen Taktsignals dem Steuerabschnitt direkt zugeführt wird.

2. Signalverarbeitungsschaltungsmodul nach Anspruch 1, wobei der Anschluss für die Ausgabe des internen Taktsignals und der Anschluss für die Eingabe des externen Taktsignals sich bis neben den Randbereich des Modulsubstrates erstrecken.

3. Signalverarbeitungsschaltungsmodul nach Anspruch 1 oder 2, wobei der Steuerabschnitt eine CPU ist.

4. Signalverarbeitungsschaltungsmodul nach Anspruch 1, 2 oder 3, wobei die Signalverarbeitungsschaltung eine Signalsende- und -empfangsschaltung ist.

## Revendications

1. Module de circuit de traitement de signaux comprenant :
un circuit de génération d'horloge pour produire un signal d'horloge interne ;
une partie commande qui fonctionne selon un signal d'horloge à fournir ;
un circuit de traitement de signaux qui fonctionne selon ledit signal d'horloge interne ;
une borne de sortie de signal d'horloge interne connectée audit circuit de génération d'horloge ; et
une borne d'entrée de signal d'horloge externe connectée à ladite partie commande,
ledit circuit de génération d'horloge, ladite partie commande et ledit circuit de traitement de signaux étant disposés sur un substrat de module, et ladite borne de sortie de signal d'horloge interne et ladite borne d'entrée de signal d'horloge externe s'étendant jusqu'à la partie de bord dudit substrat de module,
dans lequel, lorsque l'on fait fonctionner ladite partie commande selon ledit signal d'horloge interne, ladite borne de sortie de signal d'horloge interne et ladite borne d'entrée de signal d'horloge externe sont reliées de manière conductrice l'une à l'autre, ledit signal d'horloge interne est fourni à ladite partie commande via la borne de sortie de signal d'horloge interne et la borne d'entrée de signal d'horloge externe, qui sont reliées entre elles, et lorsque l'on fait fonctionner ladite partie commande selon ledit signal d'horloge externe, un signal d'horloge externe transmis à ladite borne d'entrée de signal d'horloge externe est directement fourni à ladite partie commande.

2. Module de circuit de traitement de signaux selon la revendication 1, dans lequel ladite borne de sortie de signal d'horloge interne et ladite borne d'entrée de signal d'horloge externe sont adjacentes à la partie de bord dudit substrat de module.

3. Module de circuit de traitement de signaux selon la revendication 1 ou 2, dans lequel ladite partie commande est une UC.

4. Module de circuit de traitement de signaux selon la revendication 1, 2 ou 3, dans lequel ledit circuit de traitement de signaux est un circuit d'émission et de réception de signaux.
